Europäisches Patentamt

European Patent Office

Office européen des brevets

(11) Veröffentlichungsnummer: **0 176 855 B1**

# EUROPÄISCHE PATENTSCHRIFT

(45) Veröffentlichungstag der Patentschrift: **28.08.91**

(51) Int. Cl.⁵: **H04M 1/72**

(21) Anmeldenummer: **85111702.8**

(22) Anmeldetag: **16.09.85**

(54) Schnurloses Fernsprechgerät.

(30) Priorität: **18.09.84 DE 3434221**

(43) Veröffentlichungstag der Anmeldung:
**09.04.86 Patentblatt 86/15**

(45) Bekanntmachung des Hinweises auf die
Patenterteilung:
**28.08.91 Patentblatt 91/35**

(84) Benannte Vertragsstaaten:
**AT BE CH DE LI NL SE**

(56) Entgegenhaltungen:
**EP-A- 0 115 362**
**WO-A-85/02738**
**DE-A- 2 754 332**
**DE-C- 1 277 361**

(73) Patentinhaber: **Siemens Aktiengesellschaft**
**Wittelsbacherplatz 2**
**W-8000 München 2(DE)**

(72) Erfinder: **Schön, Siegfried**
**Tulpenweg 10**
**W-8130 Starnberg(DE)**

EP 0 176 855 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft ein schnurloses Fernsprechgerät mit einer mobilen Station und einer eine Aufnahme für die mobile Station bildende ortsfeste Station, wobei die mobile Station mit einer Kennung versehen ist, die mit der Kennung der ortsfesten Station übereinstimmt. Dies ist durch die EP-A-0 115 362 bekannt.

Ein wesentliches Merkmal schnurloser Fernsprechgeräte besteht darin, daß die Verbindung zu einer ortsfesten Station und damit zum Fernsprechnetz kabellos erfolgt. Zur Unterscheidung verschiedener mobiler Stationen ist daher eine Kennung erforderlich, um die Teilnehmer individuell auseinander halten zu können. Erst wenn die Kennung der mobilen Station mit der Kennung der ortsfesten Station übereinstimmt, kann der Fernsprechverkehr aufgenommen werden.

Die Kennung besteht üblicherweise aus einem Code, der vor dem Wählvorgang ausgesendet und empfangen wird. Bei Wartungs- und/oder Reparaturarbeiten ist es unter Umständen erforderlich, den Code der ortsfesten Station auf die mobile Station zu übertragen.

Es ist Aufgabe der vorliegenden Erfindung, eine Möglichkeit aufzuzeigen, wie eine Codierung der mobilen Station ohne schaltungsmäßige Eingriffe daran möglich ist.

Gelöst wird die Aufgabe dadurch, daß an der ortsfesten und an der mobilen Station Schaltmittel vorgesehen sind, durch die die der ortsfesten Station eigene Kennung auf die mobile Station übertragbar ist, wobei die Schaltmittel an der ortsfesten Station angeordneten Schlüsselschalters gebildet sind, durch den mittels eines Spezialschlüssels es möglich ist, eine für die Übertragung der Kennung eigene Stellung einzunehmen.

Die Schaltmittel sind danach bereits immer in den beiden Stationen vorhanden. Dadurch wird ein Eingriff in das Gerät bei Wartungs- und/oder Reparaturarbeiten vermieden. Der für den Schlüsselschalter dazu erforderliche spezielle Schlüssel ist nicht im Besitz des Teilnehmers. Bei der EP-A-0 115 362 dagegen wird die Kennung über eine Tastatur im mobilen Teil vorgenommen. Somit ist diese dem Teilnehmer zugänglich, was zu einem Mißbrauch führen kann.

Vorteilhaft ist es, wenn der Schlüsselschalter mehrere Schaltstellungen aufweist, wobei eine von der neutralen Stellung abweichende Lage die Übertragung der Kennung mittels eines speziellen Schlüssels ermöglicht, während in einer anderen von der neutralen Stellung abweichenden Lage die abgehende Wahl mittels eines normalen Schlüssels unterbindbar ist.

Der Schlüsselschalter kann damit drei Funktionen erfüllen. In der neutralen Stellung ist normaler Fernsprechbetrieb möglich. In einer weiteren Stellung kann der Fernsprecher mittels eines Schlüssels, der dem Teilnehmer auszuhändigen ist, für abgehende Telefonate gesperrt werden. In einer weiteren dritten Stellung, die nur mittels eines Spezialschlüssels eingenommen werden kann, der nicht im Besitz des Teilnehmers ist, kann die Kennung des einen Gerätes auf das andere Gerät übertragen werden.

Die Übermittlung der Kennung soll im allgemeinen nicht drahtlos erfolgen. Es ist somit zweckmäßig, daß sowohl die ortsfeste als auch die mobile Station galvanische Kontakte aufweisen, über die die Kennung übertragbar ist.

Im folgenden sei die Erfindung anhand einer Abbildung näher erläutert.

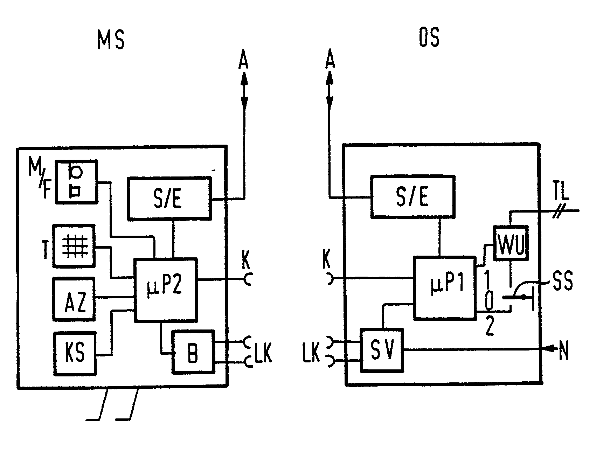

Die Abbildung zeigt eine ortsfeste und eine mobile Fernsprechstation mit den zum Verständnis der Erfindung notwendigen Einzelheiten.

Die ortsfeste Station OS weist zunächst ein Stromversorgungsteil SV auf, daß mit dem Netz H der öffentlichen Stromversorgung verbunden sein kann. Mit der Stromversorgung SV sind Ladekontakte LK verbunden, die nach außen führen. Die ortsfeste Station OS weist weiterhin ein Sende- und Empfangsteil S/E auf, das aus Empfänger, Sender, Antennenweiche, Synthesizer, Kanalschalter, Daten/NF-Umschalter sowie einer Gabel besteht. Diese Teile sind hier nicht im einzelnen gezeigt, da sie bereits zum Stand der Technik zählen und für die Erfindung unwesentlich sind. In der ortsfesten Station ist weiterhin ein Wahlumsetzer WU vorhanden, der einerseits mit der Telefonleitung TL und andererseits mit einem Mikroprozessor $\mu$P1 in Verbindung steht. Mit dem Mikroprozessor $\mu$P1 ist außerdem die Sende- und Empfangseinheit S/E sowie die Stromversorgung SE verbunden. Zusätzlich zu den genannten Einrichtungen ist im Gerät ein Schlüsselschalter SS vorgesehen, dessen Anschlüsse sowohl mit dem Mikroprozessor $\mu$P1 als auch mit dem Wahlumsetzer WU durch Drehung eines Schlüssels verbindbar sind.

Die mobile Station MS weist einen Mikroprozessor $\mu$P2 auf, an den der Kennungsspeicher KS, eine Anzeige AZ, eine Tastatur T, eine Sende- und Empfangseinheit S/E sowie die Fernsprechschaltung M/F angeschlossen ist. Die Stromversorgung übernimmt die über die Ladekontakte LK ladbare Batterie B.

In der neutralen Stellung O des Schlüsselschalters SS ist eine Kommunikation zwischen mobiler Station MS und ortsfester Station OS jederzeit möglich, jedoch unter der Voraussetzung, daß die Kennung zwischen den Stationen übereinstimmt. Wird der Schlüsselschalter in Stellung 1 gedreht, so sind abgehende Gespräche gesperrt. Wird der Schlüsselschalter in Stellung 2 gedreht, so wird bei in die Aufnahme der ortsfesten Station eingelegter mobiler Station die Kennung über die Kontakte K von der ortsfesten Station auf die mobile Station übertragen. Wird in dieser Stellung 2 das mobile Gerät erst danach in die Aufnahme eingelegt, so wird die Kennung des mobilen Gerätes gelöscht.

**Patentansprüche**

1. Schnurloses Fernsprechgerät mit einer mobilen Station und einer eine Aufnahme für die mobile Station bildende ortsfeste Station, wobei die mobile Station mit einer Kennung versehen ist, die mit der Kennung der ortsfesten Station übereinstimmt, und daß an der ortsfesten (OS) und an der mobilen (MS) Station Schaltmittel vorgesehen sind, **dadurch gekennzeichnet,** daß durch die Schaltmittel die der ortsfesten Station eigene Kennung auf die mobile Station übertragbar ist, wobei die Schaltmittel durch einen an der ortsfesten Station angeordneten Schlüsselschalters (SS) gebildet sind, durch den es mittels eines Spezialschlüssels möglich ist, eine für die Übertragung der Kennung eigene Stellung einzunehmen.

2. Schnurloses Fernsprechgerät nach Anspruch 1, **dadurch gekennzeichnet,** daß der Schlüsselschalter (SS) mehrere Schaltstellungen aufweist, wobei eine von der neutralen Stellung (O) abweichende Lage die Übertragung der Kennung mittels eines speziellen Schlüssels ermöglicht, während in einer anderen von der neutralen Stellung abweichenden Lage die abgehende Wahl mittels eines normalen Schlüssels unterbindbar ist.

**Claims**

1. Cordless telephone apparatus with a mobile station and a fixed station forming a holder for the mobile station, the mobile station being provided with an identifier, which corresponds to the identifier of the fixed station, and circuit elements being provided at the fixed station (OS) and at the mobile (MS) station, characterised in that the circuit elements allow the dedicated identifier of the fixed station to be transmitted to the mobile station, the circuit elements being formed by a key-operated switch (SS) arranged at the fixed station, by which it is possible, by means of a special key, to assume a dedicated position for the transmission of the identifier.

2. Cordless telephone unit according to Claim 1, characterised in that the key-operated switch (SS) exhibits a plurality of switching positions, one position other than the neutral position (O) allowing the transmission of the identifier by means of a special key, while in another position other than the neutral position the outgoing dialled selections can be inhibited by means of a normal key.

**Revendications**

1. Appareil téléphonique sans cordon comportant un poste mobile et un poste fixe destiné à recevoir le poste mobile, et dans lequel le poste mobile est pourvu d'une caractérisation qui coïncide avec la caractérisation du poste fixe, et des moyens de commutation sont prévus dans le poste fixe (OS) et dans le poste mobile (MS), caractérisé par le fait que la caractérisation propre au poste fixe peut être transmise par les moyens de commutation au poste mobile, les moyens de commutation étant formés par un interrupteur de codage (SS) monté dans le poste fixe et au moyen duquel il est possible, à l'aide d'un code spécial, de passer à une position particulière pour la transmission de la caractérisation.

2. Appareil téléphonique sans cordon suivant la revendication 1, caractérisé par le fait que l'interrupteur de codage (SS) possède plusieurs positions de commutation, une position, qui diffère de la position neutre (O), permettant la transmission de la caractérisation à l'aide d'un code spécial, tandis que, dans une autre position qui diffère de la position neutre, la sélection de départ peut être interrompue au moyen d'un code normal.

MS

OS